# EUROPÄISCHE PATENTANMELDUNG

(11) **EP 0 880 295 A2**
(43) Veröffentlichungstag der Anmeldung: **25.11.1998**
(21) Anmeldenummer: 98109035.0
(22) Anmeldetag: 18.05.1998
(51) Int. Cl.: H04Q 7/10, H04Q 7/16

(54) **Funkrufsystem**

(30) Priorität: 21.05.1997 DE 19721325
(71) Anmelder: Rohde & Schwarz GmbH & Co. KG, D-81671 München (DE)
(72) Erfinder: Iselt, Peter, 80997 München (DE)
(74) Vertreter: Graf, Walter, Dipl.-Ing.

(57) **Zusammenfassung**

Bei einem Funkrufsystem mit einer Zentrale und mehreren über Funkstrecken damit verbundenen mobilen Empfängern ist
a) in der Zentrale ein Mikroprozessor, ein Nachrichtenspeicher zum Speichern von zu den mobilen Empfängern zu übertragenden Nachrichten und ein Funksender vorgesehen;
b) in jedem mobilen Empfänger ist ein Funkempfänger, ein Mikroprozessor und ein dem Nachrichtenspeicher der Zentrale entsprechender Nachrichtenspeicher vorgesehen;
c) die Nachrichten werden von der Zentrale zu den mobilen Empfängern entweder
   unmittelbar als codierte Nachrichten
      oder
   als codierte Speicheradressen, unter welchen die jeweiligen Nachrichten im Nachrichtenspeicher abgespeichert sind,
      oder
   als zufällig erzeugte Codewörter, die diesen Speicheradressen zugeordnet sind,
   übertragen und dort nach Decodierung aus dem Nachrichtenspeicher ausgelesen;
d) in der Zentrale ist ein Codespeicher mit zugehöriger Codierlogik und im Empfänger ein Codespeicher mit zugehöriger Decodierlogik vorgesehen;
f) vor Beginn einer Nachrichtenaussendung werden in die Codespeicher jeweils die gleichen zufällig erzeugten Codierparameter eingespeichert, durch die über die Codier- bzw. Decodierlogik jeweils die gleiche Codier- bzw. Decodiervorschrift erzeugbar ist, und hierbei wird jeweils die durch die Zeitsteuereinrichtungen vorgegebene momentane Uhrzeit entsprechend berücksichtigt;
g) Über die Zeitsteuereinrichtungen wird die Frequenz des Funksenders und des Funkempfängers nach einem durch den Mikroprozessor vorgegebenen Frequenzprogramm sprunghaft geändert (Frequency Hopping).

## Beschreibung

Die Erfindung betrifft ein Funkrufsystem für mobile Empfänger.

Funkruf- bzw. Paging-Systeme für mobile Empfänger werden weltweit im VHF- und UHF-Bereich eingesetzt und zwar sowohl lokal, beispielsweise in Krankenhäusern oder auf Firmengeländen oder aber regional, national und multinational. Ihnen ist der Nachteil gemeinsam, daß neben aufwendigen Infrastrukturen die Funkverbindungsstrecken zwischen der Zentrale und den einzelnen mobilen Empfängern in Bezug auf Vertraulichkeit nicht geschützt sind, die von der Zentrale zu den mobilen Empfängern übertragenen Nachrichten und Informationen von Unbefugten also leicht abgehört werden können und daß Line-of-Sight (LOS)-Bedingungen vorausgesetzt werden, was eine Erreichbarkeit im für die Wellenausbreitung kritischen Gelände nicht sicherstellt.

Es ist Aufgabe der Erfindung, ein Funkrufsystem zu schaffen, das gegen solches unbefugtes Abhören sicher ist und auch im kritischen Gelände die Teilnehmererreichbarkeit gewährleistet.

Diese Aufgabe wird erfindungsgemäß gelöst durch ein Funkrufsystem laut Hauptanspruch. Vorteilhafte Weiterbildungen ergeben sich aus den Unteransprüchen.

Beim erfindungsgemäßen Funkrufsystem wird eine an sich zur Fernsteuerung von Minen bekannte Verschlüsselung und Codierung angewendet (Europäische Patentanmeldung 0 667 506 der Anmelderin) und zwar kombiniert mit einem Frequency-Hopping-Verfahren, dadurch ist der Inhalt der übertragenen Nachricht von der Zentrale zu den mobilen Empfängern gegen unbefugtes Abhören gesichert. Durch die in der Zentrale und in den Empfängern eingebauten synchron arbeitenden Zeitsteuereinrichtungen wird die Möglichkeit geschaffen, verschiedene Parameter der Verschlüsselung zeitabhängig zu verändern, so daß ein unberechtigter Benutzer nur sich mit der Zeit ändernde Signale empfängt, die nicht mehr zeitkonstant sind und daher von ihm nicht ausgewertet werden können. Damit ist ein solches Funkrufsystem gegen Abhören völlig sicher. Für die zeitabhängige Codierung gibt es dabei die im Anspruch aufgezeigten verschiedenen Möglichkeiten. Die zeitsynchron arbeitenden Zeitsteuereinrichtungen sind im einfachsten Fall zeitsynchron arbeitende Uhren, die auf geeignete Weise synchronisiert sind. Es können aber auch elektronische Zeitsteuereinrichtungen verwendet werden, beispielsweise in Form von elektronischen Zählern, die jeweils synchron gestartet werden.

Vor Ausgabe der mobilen Empfänger ist es erforderlich, den Codespeicher in der Zentrale und in den einzelnen Empfängern jeweils mit den gleichen Codierparametern zu laden. Dies kann auf verschiedene Art und Weise geschehen. Eine Möglichkeit ist, daß ein auswechselbarer Codespeicher in Form einer Chipkarte vorgesehen wird, auf dem die Codierparameter in geschützter Form (Zugangs- und Ausleseschutz) abgespeichert sind. Durch Einstecken dieser Chipkarte in der Zentrale werden so nach Eingabe der Zugangsschutzparameter die Codierparameter in den Codespeicher eingegeben. In gleicher Weise können durch Einstecken der Chipkarte in den Empfänger die Codierparameter in den Codespeicher des Empfängers eingelesen werden. Eine andere Möglichkeit bestünde darin, die Codierparameter nur in dem Codespeicher in der Zentrale einzulesen und von diesem aus beispielsweise über eine unmittelbare Leitungsverbindung, einen induktiven Koppler oder dergleichen diese Codierparameter in den unmittelbar örtlich neben den Codespeicher der Zentrale angeordneten mobilen Empfänger zu übertragen.

Als Funksender werden vorzugsweise mobile HF-Burst-Sender großer Leistung, tragbar oder für Fahrzeugbetrieb verwendet, die vorzugsweise mit HF-Bodenwellensignalen im Nahbereich arbeiten, prinzipiell aber auch mit Raumwellensignalen arbeiten können. Die Sender senden jeweils nur kurzzeitige Sendeimpulse aus und sind so auch gegen Entdeckung geschützt.

Die Erfindung wird im folgenden anhand einer schematischen Zeichnung an einem Ausführungsbeispiel naher erläutert.

Die Fig. zeigt ein Funkrufsystem bestehend aus einer Zentrale Z und mehreren kleinen hochintegrierten Empfängern E₁, E₂, Eₙ. In der Zentrale Z ist ein Mikroprozessor 10 mit zugehörigem Arbeitsspeicher 11, eine mit dem Mikroprozessor 10 verbundene Uhr 13, eine Codierlogik 14, ein Codierspeicher 15 sowie eine Aufnahmevorrichtung für einen Codespeicher S vorgesehen. Dieser Codepeicher S ist beispielsweise eine übliche Chipkarte, die in einen entsprechenden Schlitz der Zentrale eingesteckt werden kann. Über eine geeignete Lesevorrichtung werden die auf dem Codespeicher S abgespeicherte Codierparameter in den Codespeicher 15 eingelesen. In einem Nachrichtenspeicher 16 sind unter vorbestimmten Adressen ABCD verschiedene standardisierte Nachrichten mit geringem variablem Nachrichteninhalt für den Empfänger E abgespeichert, unter der Adresse A ist beispielsweise die Nachricht 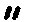 Aktion starten", unter B 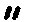 Aktion beenden", unter der Adresse C die Nachricht 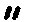 Neue Position XYZ" usw. abgespeichert. In einer Anzeigeeinheit 12 werden die gewählten Nachrichteninhalte sowie bestimmte Betriebsparameter angezeigt. Über einen HF-Burst-Sender 17 werden die Nachrichten zu dem eigentlichen Empfangsteil 22 des Empfängers E übertragen.

In der Zentrale Z ist außerdem ein Zufallsgenerator vorgesehen, der fortlaufend zufällig erzeugte Codierparameter liefert, die beim Verschlüsseln der Nachricht benutzt werden.

Im Empfänger E ist ein dem Nachrichtenspeicher 16 entsprechender Nachrichtenspeicher 26 vorgesehen, in welchem wiederum unter den gleichen Adressen A, B, C ... die gleichen Nachrichten wie im Nachrichtenspeicher 16 abgespeichert sind. Außerdem ist noch eine Decodierlogik 24 mit zugehörigem Codespeicher 25 und ein Mikroprozessor 20 mit Arbeitsspeicher 21 vorgesehen, dem wiederum eine Uhr 23 zugeordnet ist. In Verbindung mit einem am Empfangsort eventuell vorhandenen GPS-Empfangsgerät kann somit über manuelle oder rechnergestützte Auswertung der gegenwärtigen oder der neuen Position der Weg auch im unbekannten Gelände sicher beschrieben werden.

Bei einem Funkrufsystem dieser Art kann eine ausgewählte Nachricht von der Zentrale Z zu einem der mobilen Empfänger E wie folgt verschlüsselt übertragen werden:

Die Chipkarte S wird in die Aufnahmevorrichtung der Zentrale eingesteckt. Dann wird über ein Programmierfeld 6 der Zugangscode eingegeben. Unter Berücksichtigung der momentanen Uhrzeit der Uhr 13 werden dann die durch den Zufallsgenerator erzeugten Codierparameter zeitabhängig erfaßt und diese somit auch die jeweilige Uhrzeit enthaltenden Codierparameter werden im Codespeicher 15 und gleichzeitig auch auf der Chipkarte S abgespeichert. Damit enthält sowohl die Karte S als auch der Codespeicher 15 jeweils die zufällig erzeugten Codierparameter, die zur Erzeugung einer zeitabhängigen Verschlüsselung nötig sind.

Durch Einstecken der Speicherkarte S in den Empfänger E werden nach Eingabe des Zugangscodes über ein Bedien-Anzeigefeld 28 diese so zufällig erzeugten Codierparameter in den Codespeicher 25 des Empfängers E übertragen.

Soll nun beispielsweise zu einem beliebigen Zeitpunkt T1 dem Empfänger E eine Nachricht A übertragen werden, so betätigt der Benutzer die Taste A in der Zentrale, über den Mikroprozessor 10 wird unter Berücksichtigung der Zeit T1 der Uhr 13 und der durch die Codierparameter im Codespeicher 15 zu dieser Zeit T1 vorbestimmten Codiervorschrift die Adresse A des Nachrichtenspeichers 16 entsprechend codiert und über den Sender 17 zum Empfänger E übertragen. Hier werden nunmehr durch den Mikroprozessor 20 aus dem Codespeicher 25 die gleichen Codierparameter wie aus dem Codespeicher 15 ausgelesen und nach der so für die Zeit T1 der Uhr 23 bestimmten gleichen Decodiervorschrift in der Decodierlogik 24 aus der übertragenen Information die Nachricht A decodiert, die dann über den Mikroprozessor 20 aus dem Nachrichtenspeicher 26 ausgelesen und über die Anzeigeeinrichtung 28 am Empfänger E dem Benutzer angezeigt wird. Wird zu einem späteren Zeitpunkt T2 beispielsweise die Übertragung einer anderen Nachricht B gewünscht und durch den Benutzer in der Zentrale die Taste B betätigt, so wird über den Mikroprozessor 10 unter Berücksichtigung der Uhrzeit T2 ein anderer Code als zum Zeitpunkt t1 zufällig erzeugt, über die synchron mit der Uhr 13 arbeitende Uhr 23 kann jedoch wiederum im Empfänger E die gleiche Decodiervorschrift erzeugt werden wie sie zum Codieren des Befehls in der Zentrale Z im Zeitpunkt T2 benutzt wurde. Durch diese beliebige zufällige zeitabhängige Änderung der jeweiligen Codiervorschrift kann ein unbefugter Benutzer nicht erkennen, welche verschlüsselten Nachrichten zum Empfänger übertragen werden, da sich diese laufend ändern.

Neben einer zeitabhängigen Änderung der Codiervorschrift wird jeweils gesteuert über die synchron arbeitenden Uhren 13, 23 außerdem die Sendefrequenz des Burst-Senders 17 und die entsprechende Empfangsfrequenz des Empfangsteiles 22 nach einem durch den Mikroprozessor 10 bzw. 20 vorgegebenen Programm sprunghaft geändert bzw. es wird zu verschiedenen dem Benutzer nicht vorhersehbaren Zeiten gesendet und empfangen.

In dem gezeigten Ausführungsbeispiel sind jeweils in den Empfängern E und in der Zentrale Uhren 13 bzw. 23 vorgesehen, eine andere Möglichkeit besteht darin, unmittelbar auf der Speicherkarte S eine entsprechende elektronische Zeitsteuereinrichtung in Form eines Mikrochips 4 anzubringen. Dadurch werden getrennte Uhren überflüssig, da über die in der Speicherkarte vorgesehene Zeitsteuereinrichtung 4 auch die jeweilige momentane Zeit ausgelesen und entsprechend berücksichtigt werden kann.

Die Uhren müssen möglichst geringen Gangunterschied aufweisen, dazu werden diese beispielsweise über Funk von Zeit zu Zeit nachsynchronisiert.

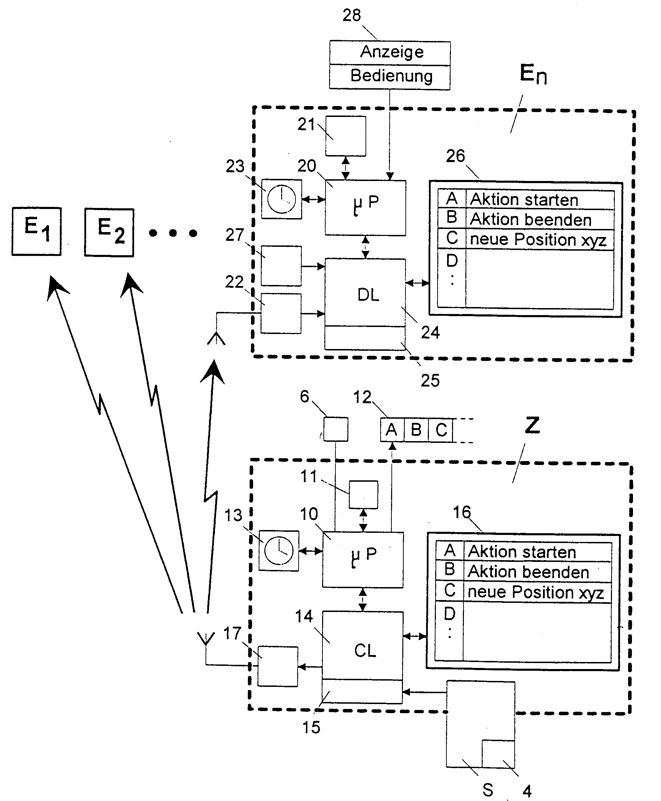

## Patentansprüche

1. Funkrufsystem mit einer Zentrale (Z) und mehreren über Funkstrecken damit verbundenen mobilen Empfängern (E), **gekennzeichnet** durch folgende Merkmale:
a) in der Zentrale (Z) ist ein Mikroprozessor (10), ein Nachrichtenspeicher (16) zum Speichern von zu den mobilen Empfängern zu übertragenden Nachrichten und ein Funksender (17) vorgesehen;
b) in jedem mobilen Empfänger (E) ist ein Funkempfänger (22), ein Mikroprozessor (20) und ein dem Nachrichtenspeicher (16) der Zentrale entsprechender Nachrichtenspeicher (26) vorgesehen;
c) die Nachrichten werden von der Zentrale (Z) zu den mobilen Empfängern entweder
unmittelbar als codierte Nachrichten
oder
als codierte Speicheradressen (A,B,C), unter welchen die jeweiligen Nachrichten im Nachrichtenspeicher (16,26) abgespeichert sind,
oder
als zufällig erzeugte Codewörter, die diesen Speicheradressen (A,B,C) zugeordnet sind,
übertragen und dort nach Decodierung aus dem Nachrichtenspeicher (26) ausgelesen;
d) in der Zentrale (Z) ist ein Codespeicher (15) mit zugehöriger Codierlogik (14) und im Empfänger (E) ein Codespeicher (25) mit zugehöriger Decodierlogik (24) vorgesehen;
f) vor Beginn einer Nachrichtenaussendung werden in die Codespeicher (15,25) jeweils die gleichen zufällig erzeugten Codierparameter eingespeichert, durch die über die Codier- bzw. Decodierlogik (14,24) jeweils die gleiche Codier- bzw. Decodiervorschrift erzeugbar ist, und hierbei wird jeweils die durch die Zeitsteuereinrichtungen (13,23) vorgegebene momentane Uhrzeit entsprechend berücksichtigt;
g) Über die Zeitsteuereinrichtungen (13,23) wird die Frequenz des Funksenders (17) und des Funkempfängers (22) nach einem durch den Mikroprozessor (10,20) vorgegebenen Frequenzprogramm sprunghaft geändert (Frequency Hopping).

2. System nach Anspruch 1, dadurch **gekennzeichnet,** daß die jeweils zufällig erzeugten Codierparameter in einem Zufallsgenerator erzeugt werden.

3. System nach Anspruch 1 oder 2, dadurch **gekennzeichnet,** daß über die Zeitsteuereinrichtungen die Sende/Empfangs-Zeiten in der Zentrale und in den Empfängern nach einem vorbestimmten Programm synchron geändert werden (Time Hopping).

4. System nach einem der vorhergehenden Ansprüche, dadurch **gekennzeichnet,** daß die Codierparameter auf einer Chipkarte abgespeichert sind und über diese in den Codespeicher (15,25) der Zentrale bzw. der Empfänger übertragbar sind.

5. System nach einem der vorhergehenden Ansprüche, dadurch **gekennzeichnet,** daß die Zeitsteuereinrichtungen synchron betriebene Uhren sind.

6. System nach einem der vorhergehenden Ansprüche, dadurch **gekennzeichnet,** daß die Zeitsteuereinrichtungen synchron gesteuerte elektronische Zähler sind.
